# EUROPÄISCHE PATENTSCHRIFT

(11) **EP 3 038 732 B1**
(45) Veröffentlichungstag und Bekanntmachung des Hinweises auf die Patenterteilung: **28.02.2018**
(21) Anmeldenummer: 14756048.6
(22) Anmeldetag: 28.08.2014
(51) Int. Cl.: B01D 46/52, B01D 46/10, B01D 39/16, B01D 29/01, D01D 5/00, B01D 39/18, B01D 46/00

(54) **FILTERMATERIAL, FILTERELEMENT UND VERFAHREN ZUM HERSTELLEN EINES FILTERMATERIALS**
FILTER MATERIAL, FILTER ELEMENT, AND A METHOD FOR PRODUCING A FILTER MATERIAL
MATÉRIAU FILTRANT, ÉLÉMENT FILTRANT ET PROCÉDÉ POUR PRODUIRE UN MATÉRIAU FILTRANT

(30) Priorität: 29.08.2013 IN 2552DE2013; 21.10.2013 DE 102013221341
(43) Veröffentlichungstag der Anmeldung: 06.07.2016
(73) Patentinhaber: Mahle International GmbH, 70376 Stuttgart (DE)
(72) Erfinder: AGRAHARI, Sushil, Kanpur 208001 (IN); KAPOOR, Rajeev, New Delhi 110016 (IN); KUMAR, Mahesh, Gurgaon 122001 (IN); SINGLA, Puneet, 121006 Faridabad, Haryana (IN)
(74) Vertreter: BRP Renaud & Partner mbB Rechtsanwälte Patentanwälte Steuerberater
(86) Internationale Anmeldenummer: PCT/EP2014/068213
(87) Internationale Veröffentlichungsnummer: WO 2015/028530

(56) Entgegenhaltungen:
- EP-A1- 1 366 791
- EP-A2- 1 059 106
- EP-A2- 2 183 414
- WO-A1-2005/024101
- WO-A1-2007/054039
- WO-A1-2009/136395
- WO-A1-2011/015439
- WO-A1-2013/068436
- WO-A2-2008/142023
- WO-A2-2010/009043
- DE-U1-202010 009 671
- US-A- 4 144 553
- US-A1- 2009 126 333
- US-A1- 2009 272 084

## Beschreibung

Die vorliegende Erfindung betrifft ein mehrlagiges, bahnförmiges Filtermaterial für Filterelemente zur Filtration von Gasen und/oder Flüssigkeiten, gemäß Anspruch 1. Die Erfindung betrifft außerdem ein Filterelement, das mittels eines derartigen Filtermaterials hergestellt ist. Schließlich betrifft die vorliegende Erfindung ein Verfahren zum Herstellen eines derartigen Filtermaterials.

Filtrationsaufgaben gibt es in vielen Bereichen der Technik. Von besonderer Bedeutung sind im Rahmen der vorliegenden Anmeldung Fahrzeuganwendungen, also Filtrationsaufgaben an bzw. in Fahrzeugen, wie zum Beispiel bei einem Luftfilter, einem Kraftstofffilter, einem Ölfilter.

In einem Filter bzw. einer Filtereinrichtung kommen Filterelemente zum Einsatz, die jeweils zumindest einen Filterkörper aufweisen. Der Filterkörper ist dabei bevorzugt aus einem bahnförmigen Filtermaterial hergestellt, das zur Ausbildung des Filterkörpers gefaltet bzw. plissiert ist. Für eine effiziente Filtration und lange Standzeiten sind mehrlagige Filtermaterialien grundsätzlich bekannt. Zur Realisierung hoher Abscheidegrade für kleine und kleinste Verunreinigungen sind außerdem Nanofilter bekannt. Bei der Filtration existiert das allgemeine Problem, dass mit zunehmendem Filtrationsgrad auch ein Durchströmungswiderstand des Filtermaterials zunimmt. Wird beispielsweise ein besonders hoher Filtrationsgrad, insbesondere in Verbindung mit einer Nanostruktur, angestrebt, ergibt sich für das zugehörige Filtermaterial in der Regel ein sehr hoher Durchströmungswiderstand. Hohe Durchströmungswiderstände sind jedoch nachteilig, da sie zum einen das Filtermaterial mechanisch belasten und zum anderen ggf. eine angepasste Peripherie erfordern, wie zum Beispiel erhöhte Förderleistungen von Pumpen sowie verstärkte Dichtungsmaßnahmen.

Ein gattungsgemäßes Filtermaterial ist aus der DE 20 2010 009 671 U1 bekannt.

Aus der WO 2013/068436 A1 ist ein Filtermaterial für ein Filterelement bekannt, das eine Trägerschicht, die beispielsweise ein Polymervlies oder Zellulose aufweisen kann, und eine Feinfaserschicht sowie eine Nanofaserlage umfasst. Die beiden Schichten sind durch einen Verbindungsbereich miteinander verbunden, wobei die Trägerschicht vollständig imprägniert sein kann.

Aus der EP 2 183 414 A2 ist ein Filtermaterial bekannt, das eine Feinfaserlage und eine Celluloselage aufweist, wobei es sich bei der Feinfaserlage auch um einen Nanofaserlage handeln kann. Die Celluloselage kann mit einer Silikon-Imprägnierung versehen sein.

Weitere Filtermaterialien sind beispielsweise aus der US 5 993 501 A, der DE 10 2007 027 199 B4 und der EP 1 366 791 A1 bekannt.

Die vorliegende Erfindung beschäftigt sich mit dem Problem, für ein Filtermaterial bzw. für ein Filterelement bzw. für ein Herstellungsverfahren sowie für eine Herstellungsvorrichtung eine verbesserte Ausführungsform anzugeben, die sich insbesondere durch einen hohen Filtrationsgrad bei vergleichsweise geringem Durchströmungswiderstand auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das Filtermaterial zumindest dreilagig auszugestalten und dementsprechend zumindest mit einer Vlieslage, einer Nanofaserlage und einer Celluloselage auszustatten. Die Nanofaserlage ist dabei zwischen der Vlieslage und der Celluloselage angeordnet. Hierzu wird die Nanofaserlage durch eine Beschichtung der Vlieslage mit Nanofasern gebildet. Außerdem wird die Celluloselage mittels eines Klebestoffs mit der Nanofaserlage verklebt. Hierdurch wird ein fester Verbund zwischen den drei einzelnen Lagen realisiert, da die Nanofaserlage sowohl mit der Vlieslage als auch mit der Celluloselage fest verbunden ist. Es hat sich gezeigt, dass das so gebildete, mehrlagige Filtermaterial vom jeweiligen zu reinigenden Medium vergleichsweise geradlinig durchströmbar ist, was auf die feste Verbindung der einzelnen Lagen untereinander zurückgeführt wird. Bei lose aneinander anliegenden Lagen ist dagegen häufig eine Scherströmung zu beobachten, die sich also parallel zur Ebene der jeweiligen Lage orientiert. Derartige Scherströmungen werden beim hier vorgestellten Filtermaterial weitgehend vermieden, so dass die einzelnen Lagen weitgehend quer zu ihrer Ebene durchströmt werden, also im Wesentlichen nur in ihrer Dickenrichtung. Hierdurch lässt sich der Durchströmungswiderstand signifikant reduzieren.

Erfindungsgemäß ist die Celluloselage an einer der Nanofaserlage zugewandten Seite mit einer Imprägnierung versehen sein. Durch diese Imprägnierung wird erreicht, dass der Klebstoff zwar eine feste Verbindung zwischen der Nanofaserlage und der Celluloselage herstellen kann, jedoch nicht so weit in die Celluloselage eindringen kann, dass er dadurch die Poren der Celluloselage verschließt.

Erfindungsgemäß ist die Imprägnierung auf den Klebstoff abgestimmt, derart, dass die Imprägnierung gezielt ein Eindringen des Klebstoffs in die Celluloselage verhindert oder zumindest behindert.

Gemäß einer anderen vorteilhaften Ausführungsform kann der Klebstoff auf einer Wasserbasis hergestellt sein. Derartige Klebstoffe zeichnen sich durch eine relativ hohe Umweltverträglichkeit aus. Insbesondere kann dadurch auch ein Recycling des Filtermaterials vereinfacht werden.

Bei einer anderen vorteilhaften Ausführungsform kann vorgesehen sein, die Imprägnierung auf einer Silikonbasis herzustellen oder durch Silikon zu bilden. Eine derartige Imprägnierung wirkt stark hydrophob und kann dadurch eine Benetzung der Celluloselage mit Wasser bzw. mit einem wasserbasierten Klebstoff behindern.

Bei einer anderen vorteilhaften Ausführungsform kann die Nanofaserlage in einer Dickenrichtung des Filtermaterials eine zunehmende Faserdicke und/oder eine zunehmende Faserdichte aufweisen. Es hat sich gezeigt, dass auch eine derartige Ausführungsform zu einem reduzierten Durchströmungswiderstand führen kann, wobei gleichzeitig ein hoher Filtrationsgrad realisierbar ist. Die Faserdicke und die Faserdichte beeinflussen signifikant den Filtrationsgrad sowie den Durchströmungswiderstand. Durch die hier vorgeschlagene Graduierung der Faserdicke und/oder der Faserdichte wird somit auch die Filtrationswirkung graduiert. Dies führt dazu, dass grobe Verunreinigungen in einem Bereich niedriger Filtration zurückgehalten werden, während kleinere Verunreinigungen tiefer in das Filtermaterial eindringen können und darin in einem Bereich mit höherem Filtrationsgrad aufgehalten werden. Im Vergleich zu einem herkömmlichen Filtermaterial, dessen Nanofasern in der Dickenrichtung hinsichtlich Faserdicke und Faserdichte kontinuierlich gefertigt sind, kann durch die vorgeschlagene Graduierung, bei gleichem Filtrationsgrad ein reduzierter Durchströmungswiderstand realisiert werden. Dies wird damit erklärt, dass bei einer herkömmlichen Nanofaserstruktur sowohl die groben als auch die kleinen Verunreinigungen bereits außen an der Nanofaserstruktur abgeschieden werden.

Entsprechend einer vorteilhaften Weiterbildung können die Faserdicke und/oder die Faserdichte in der Dickenrichtung des Filtermaterials stufenlos, vorzugsweise gleichmäßig, oder gestuft zunehmen. Zusätzlich oder alternativ kann vorgesehen sein, dass die Faserdicke und/oder die Faserdichte von der Vlieslage zur Celluloselage hin zunimmt. Zweckmäßig kann innerhalb der Nanofaserlage die Faserdicke von 100 nm bis 800 nm variieren.

Ein erfindungsgemäßes Filterelement zum Filtern von Gasen und/oder Flüssigkeiten umfasst zumindest einen Filterkörper, der im Betrieb des Filterelements von einem Strom aus Gas und/oder Flüssigkeit durchströmt ist, wobei der jeweilige Filterkörper ein Filtermaterial der vorstehend beschriebenen Art aufweist.

Zur Vergrößerung der durchströmbaren Filterfläche kann das Filtermaterial zweckmäßig plissiert also gefaltet sein.

Entsprechend einer anderen Ausführungsform kann das Filterelement ein Ringfilterelement mit ringförmigem Filterkörper oder ein Plattenfilterelement mit plattenförmigem Filterkörper sein.

Ein erfindungsgemäßes Herstellungsverfahren, mit dem ein mehrlagiges, bahnförmiges Filtermaterial, insbesondere der vorstehend beschriebenen Art, hergestellt werden kann, charakterisiert sich dadurch, dass eine bahnförmige Vlieslage einseitig mit Nanofasern beschichtet wird, um unmittelbar an der Vlieslage eine Nanofaserlage zu erzeugen. Ferner wird auf eine Celluloselage zumindest einseitig ein Klebstoff aufgebracht. Schließlich werden die Celluloselage und die Vlieslage zusammengeführt, derart, dass der Klebstoff die Celluloselage mit der Nanofaserlage verbindet. Die Celluloselage ist vor dem Aufbringen des Klebstoffs einseitig mit einer Imprägnierung zu versehen.

Die Nanofasern können entsprechend einer vorteilhaften Ausführungsform in einer Beschichtungsstation auf die Vlieslage elektrostatisch aufgebracht werden, wobei in einer Faserabgabeeinrichtung dieser Beschichtungsstation zwischen dem flüssigen Fasermateral und der Vlieslage ein Abstand besteht. Es erfolgt somit keine unmittelbare Kontaktierung, zwischen der Vlieslage und dem flüssigen Fasermaterial. Insbesondere kommt es zu keinem Eintauchen der Vlieslage in das flüssige Fasermaterial. Vielmehr wird die Vlieslage beabstandet am flüssigen Fasermaterial vorbeigeführt. Mittels elektrostatischer Ladung können zwischen dem flüssigen Fasermaterial und der Vlieslage Ionenströme erzeugt werden, die das Fasermaterial molekülweise auf die Vlieslage transportieren. Damit sich die Moleküle des Fasermaterials aus dem flüssigen Fasermaterial besser ablösen und über den Ionenstrom zur Vlieslage gelangen können, ist es zweckmäßig, innerhalb der Faserabgabeeinrichtung eine linienförmige oder punktförmige Oberfläche für das flüssige Fasermaterial zu schaffen, um dort besonders hohe elektrostatische Spannungen erzeugen zu können. Dies kann beispielsweise dadurch erfolgen, dass eine Walze an ihrer Unterseite in das flüssige Fasermaterial eintaucht und an ihrer Oberseite der Vlieslage zugewandt ist. Besonders vorteilhaft ist jedoch eine Ausführungsform, bei welcher die Faserabgabeeinrichtung durch eine Art Förderband gebildet ist, das mehrere stabförmige Abgabeelemente aufweist, die in der Bewegungsrichtung des Förderbands hintereinander angeordnet sind und in der Bewegungsrichtung des Förderbands voneinander beabstandet sind. Das Förderband taucht an seiner Unterseite in das flüssige Fasermaterial ein und ist an seiner Oberseite der Vlieslage zugewandt. Die stabförmigen Abgabeelemente werden durch die Bewegung des Förderbands in das Fasermaterial eingetaucht und dabei mit Fasermaterial getränkt, das sie dann an der anderen Seite über eine linienförmige oder punktförmige Abgabezone mit Hilfe der Elektrostatik bzw. mit Hilfe der Ionenströme an die Vlieslage abgeben können.

Entsprechend einer vorteilhaften Weiterbildung kann der Abstand in der Bewegungsrichtung der Vlieslage zunehmen oder abnehmen. Es hat sich gezeigt, dass der Abstand zwischen Vlieslage und der jeweiligen, das Fasermaterial abgebenden Oberfläche bzw. Zone, die bevorzugt linienförmig oder punktförmig ausgestaltet ist, entscheidend ist für die realisierbare Faserdicke und/oder Faserdichte. Durch Verändern des Abstands in der Bewegungsrichtung kann somit die Faserdicke und/oder die Faserdichte beeinflusst werden.

Bei einer anderen Ausführungsform kann die Vlieslage mit einer Neigung gegenüber einer horizontalen und ebenen Oberfläche des Fasermaterials vorbeibewegt werden. Hierdurch wird ein kontinuierlich abnehmender bzw. kontinuierlich zunehmender Abstand zwischen Vlieslage und Fasermaterial erreicht. Zum Einstellen der Abstände kann optional vorgesehen sein, dass eine Neidung der Vlieslage gegenüber einer Horizontalebene einstellbar ist.

Bei einer anderen Ausführungsform können mehrere Faserabgabeeinrichtungen in der Bewegungsrichtung der Vlieslage hintereinander vorgesehen sein, in denen verschiedene Abstände zwischen dem Fasermaterial und der Vlieslage bestehen. Dabei kann grundsätzlich jede einzelne Faserabgabeeinrichtung gemäß der vorstehend beschriebenen Art als Förderband konfiguriert sein. Die einzelnen Faserabgabeeinrichtungen können d 7a tional höhenverstellbar sein, um die Abstände einstellen zu können.

Die Vlieslage kann auch als "non-woven" oder als "blow-melt" bezeichnet werden.

Eine Vorrichtung zum Herstellen eines Filtermaterials, insbesondere der vorstehend beschriebenen Art, umfasst wenigstens eine Faserabgabeeinrichtung, die ein Förderband mit wenigstens zwei Walzen und eine mit flüssigem Fasermaterial befüllbare Wanne aufweist, in welche das Förderband zumindest an einer Unterseite eintaucht, wenigstens zwei Umlenkrollen zum Führen einer Vlieslage oberhalb der Faserabgabeeinrichtung und beabstandet zu einer Oberseite des Förderbands und eine lonisierungseinrichtung zum Erzeugen unterschiedlicher elektrischer Potentiale an der Vlieslage und an der Faserabgabeeinrichtung, derart, dass im Betrieb der Vorrichtung flüssiges Fasermaterial elektrostatisch vom Förderband zur Vlieslage transportiert wird. Es hat sich gezeigt, dass mit einer derartigen Vorrichtung eine Nanofaserschicht besonders einfach
und mit reproduzierbaren Parametern wie Dichte und Dicke auf die Vlieslage auftragen lässt.

Gemäß einer vorteilhaften Ausführungsform kann die Vorrichtung so ausgestaltet sein, dass ein Abstand zwischen der Vlieslage und der jeweiligen Oberseite des Förderbands in der Bewegungsrichtung der Vlieslage variiert. Hierdurch lässt sich eine graduierte Beschichtung, also eine Beschichtung mit in der Dickenrichtung variierender Dichte auf die Vlieslage aufbringen.

Vorteilhaft kann besagter Abstand z.B. dadurch eingestellt werden, dass wenigstens eine der Umlenkrollen höhenverstellbar angeordnet ist. Zusätzlich oder alternativ kann vorgesehen sein, dass wenigstens eine solche Faserabgabeeinrichtung höhenverstellbar angeordnet ist.

Ein variierender Abstand lässt sich auch dadurch realisieren, dass die Walzen so angeordnet sind, dass die Oberseite des Förderbands gegenüber einer Horizontalebene geneigt verläuft. Hierzu können die Walzen verschiedene Durchmesser besitzen und/oder auf verschiedenen Höhenlagen angeordnet sein, so dass sie unterschiedlich tief in die Wanne eintauchen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte Schnittansicht eines Filtermaterials,
- Fig. 2: eine stark vereinfachte Prinzipdarstellung einer Vorrichtung zum Herstellen von Filtermaterial,
- Fig. 3: eine stark vereinfachte Prinzipdarstellung einer Beschichtungsstation,
- Fig. 4-6: Ansichten wie in Fig. 3, jedoch bei anderen Ausführungsformen der Beschichtungsstation.

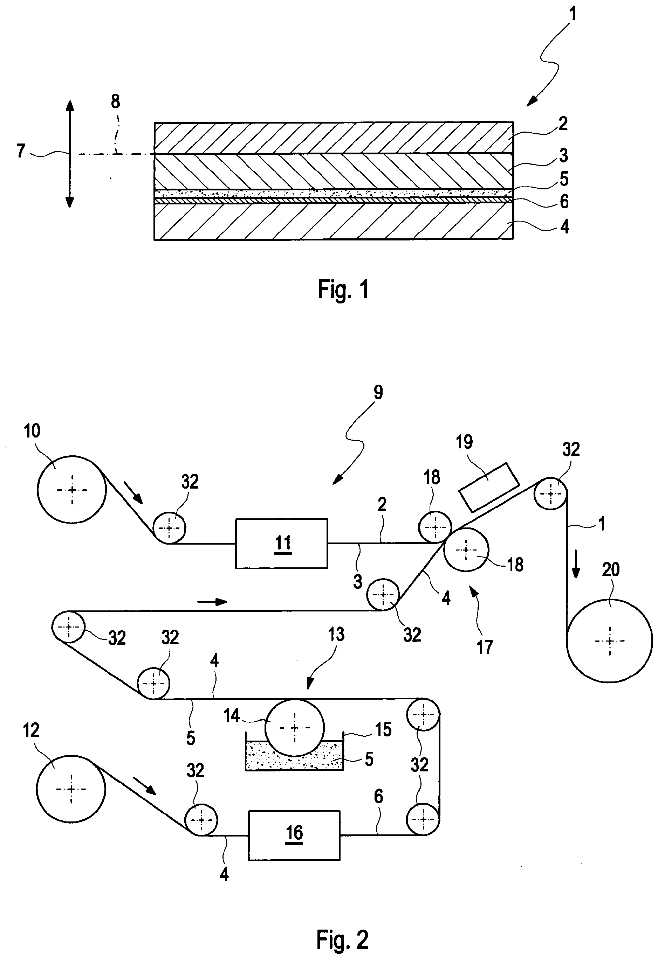

Entsprechend Fig. 1 umfasst ein mehrlagiges, bahnförmiges Filtermaterial 1, das sich für die Herstellung von Filterelementen sowie zur Filtration von Gasen und/oder Flüssigkeiten eignet, einen wenigstens dreilagigen Aufbau, so dass das Filtermaterial 1 eine Vlieslage 2, eine Nanofaserlage 3 und eine Celluloselage 4 aufweist. Die Nanofaserlage 3 ist dabei zwischen der Vlieslage 2 und der Celluloselage 4 angeordnet. Die Nanofaserlage 3 ist bevorzugt dadurch gebildet, dass auf die Vlieslage 2 eine Beschichtung aus Nanofasern aufgebracht ist. Hierdurch ist die Nanofaserlage 3 fest mit der Vlieslage 2 verbunden. Die Celluloselage 4 ist mittels eines Klebstoffs 5 auf die Nanofaserlage 3 aufgeklebt, also ebenfalls fest mit der Nanofaserlage 3 verbunden. Die Celluloselage 4 ist an einer der Nanofaserlage 3 zugewandten Seite mit einer Imprägnierung 6 versehen.

Somit erfolgt die Verklebung der Nanofaserlage 3 mit der Celluloselage 4 mittels des Klebstoffs 5 mittelbar, nämlich über die Imprägnierung 6.

Die Imprägnierung 6 ist auf den Klebstoff 5 abgestimmt, derart, dass die Imprägnierung 6 ein Eindringen des üblicherweise in flüssiger Form aufgebrachten, nicht getrockneten bzw. nicht ausgehärteten Klebstoffs 5 in die Celluloselage 4 verhindert oder zumindest behindert. Beispielsweise ist der Klebstoff 5 auf einer Wasserbasis hergestellt, so dass er sich insbesondere durch Trocknung verfestigt. Die Imprägnierung 6 ist dann zweckmäßig auf einer Silikonbasis hergestellt oder unmittelbar durch Silikon gebildet.

Die Nanofaserlage 3 weist in einer in Fig. 1 durch einen Pfeil angedeuteten Dickenrichtung 7, die sich quer zu einer Bahnebene 8 erstreckt, in der das Filtermaterial 1 liegt, eine zunehmende Faserdicke und eine zunehmende Faserdichte auf. In der Regel führt eine zunehmende Faserdicke gleichzeitig zu einer zunehmenden Faserdichte, die ihrerseits mit einer Reduzierung der Porengröße der Nanofaserlage 3 und somit mit einer erhöhten Filtrationswirkung einhergeht. Denkbar ist auch eine Ausführungsform, bei der die Faserdicke zunimmt, während die Faserdichte im Wesentlichen konstant bleibt, oder bei der die Faserdichte zunimmt, während die Faserdicke im Wesentlichen konstant bleibt.

Die Faserdicke und/oder die Faserdichte können in der Dickenrichtung 7 des Filtermaterials 1 stufenlos oder gestuft zunehmen. Bei einer stufenlosen Zunahme kann eine gleichmäßige oder lineare Zunahme bevorzugt sein. Bei einer gestuften Zunahme sind zwei oder mehr Stufen denkbar.

Vorzugsweise nimmt die Faserdicke bzw. die Faserdichte von der Vlieslage 2 in Richtung zur Celluloselage 4 zu. In diesem Fall also entgegen der Dickenrichtung 7 gemäß Fig. 1. Eine bevorzugte Durchströmungsrichtung des Filtermaterials 1 entspricht dann der Richtung, in der auch die Faserdicke bzw. die Faserdichte zunimmt. Dementsprechend ist eine bevorzugte Durchströmungsrichtung des Filtermaterials 1 der Dickenrichtung 7 entgegengerichtet.

Mit Hilfe des hier gezeigten Filtermaterials 1 lässt sich ein hier nicht gezeigtes Filterelement herstellen, das zum Filtern von Gasen und/oder Flüssigkeiten dient und zum Herausfiltern von festen Verunreinigungen dient. Hierzu umfasst das jeweilige Filterelement zumindest einen Filterkörper, der mit Hilfe eines derartigen Filtermaterials 1 hergestellt ist. Im Betrieb des Filterelements ist dieser Filterkörper von dem zu reinigenden Fluid durchströmt. Zweckmäßig ist das Filtermaterial 1 im Filterkörper plissiert, also zick-zack-förmig gefaltet. Bei bevorzugten Ausführungsformen handelt es sich beim Filterelement um ein Ringfilterelement, das sich durch einen ringförmigen Filterkörper auszeichnet, oder um ein Plattenfilterelement, das sich durch einen plattenförmigen, insbesondere ebenen, Filterkörper auszeichnet.

Nachfolgend wird anhand der Fig. 2 bis 6 ein Verfahren zum Herstellen eines mehrlagigen, bahnförmigen Filtermaterials 1 näher beschrieben, wobei eine zugehörige Vorrichtung 9 stark vereinfacht wiedergegeben ist.

Im Rahmen des Herstellungsverfahrens wird eine bahnförmige Vlieslage 2 einseitig mit Nanofasern beschichtet, wodurch unmittelbar an der Vlieslage 2 eine Nanofaserlage 3 erzeugt wird. Hierzu wird die Vlieslage 2 von einer Vlieslagenrolle 10 abgerollt, welche die Vlieslage 2 quasi endlos bereitstellt. In einer Beschichtungsstation 11 erfolgt die einseitige Beschichtung der Vlieslage 2 mit Nanofasern, um daran die Nanofaserlage 3 auszubilden. In den Fig. 2 bis 6 wird die Nanofaserlage 3 jeweils an der Unterseite der Vlieslage 2 erzeugt.

Des Weiteren wird in der Vorrichtung 9 auf eine bahnförmige Celluloselage 4 ein Klebstoff 5 aufgebracht. Hierzu wird die Celluloselage 4 von einer Celluloselagerolle 12 abgerollt, welche die Celluloselage 4 quasi endlos bereitstellt. In einer Klebstoffaufbringstation 13 wird der Klebstoff 5 auf eine Seite der Celluloselage 4 aufgebracht. Dies kann rein exemplarisch mittels einer Transferwalze 14 erfolgen, die unten in eine mit Klebstoff 5 gefüllte Wanne 15 eintaucht und an ihrer Oberseite den Klebstoff 5 auf die Celluloselage 4 überträgt. Die Celluloselage 4 wird vor dem Aufbringen des Klebstoffs 5 imprägniert. Dies erfolgt in einer Imprägnierstation 16, die auf geeignete Weise die Celluloselage 4 an der mit dem Klebstoff 5 zu versehenden Seite mit einer Imprägnierung 6 versieht. Das Aufbringen der Imprägnierung 6 kann durch Eintauchen der Celluloselage 4 in ein Imprägniermittelbad oder durch Aufsprühen des Imprägniermittels erfolgen.

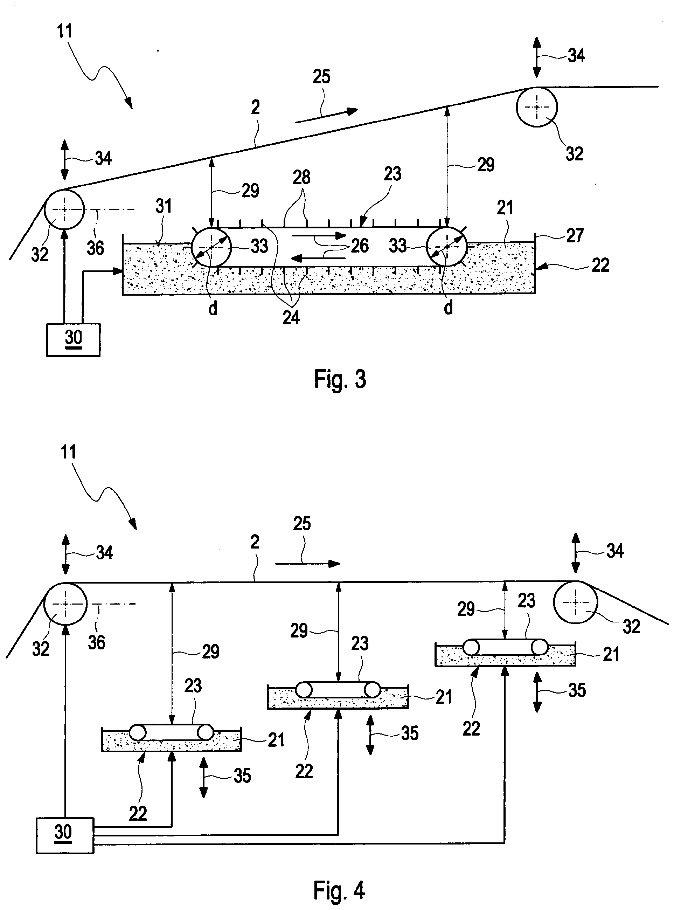

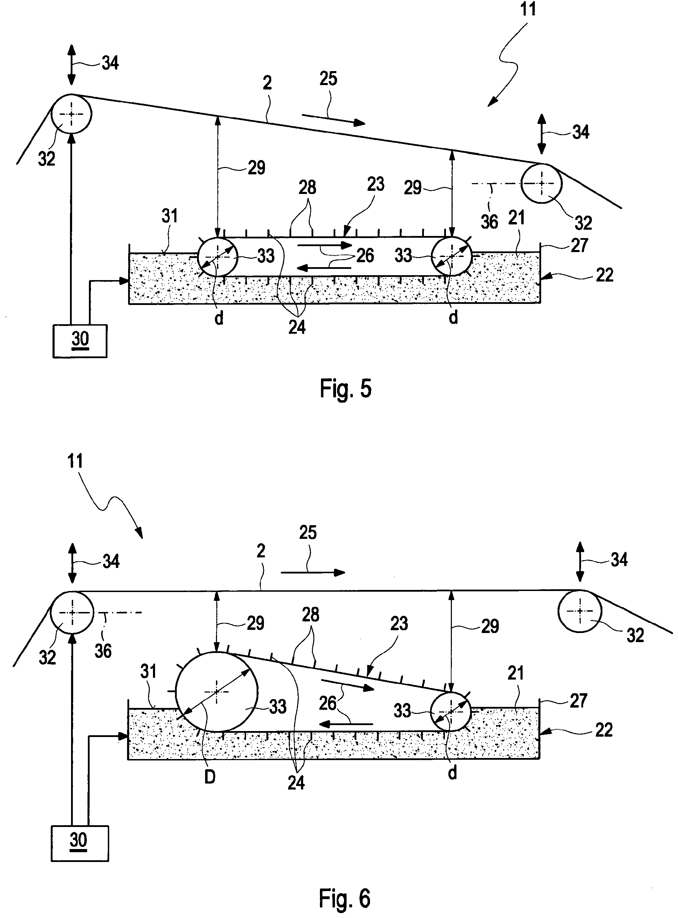

In einer Verbindungsstation 17 werden die Vlieslage 2 und die Celluloselage 4 zusammengeführt, derart, dass der Klebstoff 5 die Celluloselage 4 mit der Nanofaserlage 3 verbindet. Die Verbindungsstation 17 ist hier vereinfacht durch zwei Walzen 18 wiedergegeben, zwischen denen die einzelnen Lagen 2, 3, 4 hindurchgeführt sind, so dass die beiden Walzen 18 über diese Lagen 2, 3, 4 aneinander abrollen. Nach der Verbindungsstation 17 kann eine Heizstation 19 angeordnet sein, die für ein Aushärten bzw. Trocknen des Klebstoffs 5 sorgt. Anschließend kann das dreilagige Filtermaterial 1 auf eine Filtermaterialrolle 20 aufgewickelt werden, die das bahnförmige Filtermaterial 1 quasi endlos bevorratet. Gemäß den Fig. 3 bis 6 kann die Beschichtungsstation 11 die Nanofasern elektrostatisch auf die Vlieslage 2 aufbringen. Hierzu wird die Vlieslage 2 beabstandet zum flüssigen Fasermaterial 21 vorbeigeführt, das hierzu in wenigstens einer Faserabgabeeinrichtung 22 der Beschichtungsstation 11 bereitgestellt wird. Bei der in Fig. 3 gezeigten Ausführungsform ist nur eine derartige Faserabgabeeinrichtung 22 vorgesehen. Bei der in Fig. 4 gezeigten Ausführungsform sind rein exemplarisch drei derartige Faserabgabeeinrichtungen 22 vorgesehen. Bei den Fig. 5 und 6 ist dagegen jeweils wieder nur eine Faserabgabeeinrichtung 22 vorgesehen.

Die jeweilige Faserabgabeeinrichtung 22 ist hier mit Hilfe eines Förderbands 23 realisiert, das mehrere geradlinige, stabförmige oder stegförmige Abgabeelemente 24 aufweist. Die Abgabeelemente 24 erstrecken sich zweckmäßig über die gesamte Breite der jeweiligen Vlieslage 2 und erstrecken sich dabei quer zu einer Bewegungsrichtung 25 der Vlieslage 2. Die Abgabeelemente 24 erstrecken sich dabei auch quer zu einer Bewegungsrichtung 26 des Förderbands 23. Das Förderband 23 ist so angeordnet, dass es mit seiner Unterseite in eine Wanne 27 eintaucht, in der das flüssige Fasermaterial 21 bevorratet ist. Hierdurch werden die Abgabeelemente 24 in das flüssige Fasermaterial 21 eingetaucht. An seiner Oberseite bewegt sich das Förderband 23 außerhalb des flüssigen Fasermaterials 21 und ist der Vlieslage 2 zugewandt. Die Abgabeelemente 24 definieren zweckmäßig linienförmige Abgabezonen 28, die der Vlieslage 2 zugewandt sind und die zur Vlieslage 2 beabstandet sind. Ein entsprechender Abstand ist in den Fig. 3 bis 6 eingezeichnet und mit 29 bezeichnet. Die Abgaselemente 24 können quer zur Bewegungsrichtung 26 des Förderbands 23 mehrere nadelförmige Erhebungen (nicht gezeigt) aufweisen, wodurch sich punktförmige Abgabezonen 28 realisieren lassen.

Das Förderband 23 ist mittels wenigstens zwei Walzen 33 aufgespannt und angetrieben. Die Walzen 33 besitzen im Beispiel der Fig. 3 gleiche Durchmesser d, so dass sich die gegeneinander bewegenden Oberseite und Unterseite des Förderbands 23 parallel zueinander erstrecken. Im Beispiel der Fig. 3 sind die Rotationsachsen der beiden Walzen 33 in einer gemeinsamen Ebene angeordnet, die sich horizontal erstreckt. Somit verlaufen auch die Oberseite und die Unterseite des Förderbands 23 hier horizontal.

Mit Hilfe einer lonisierungseinrichtung 30 lassen sich unterschiedliche elektrische Potentiale an der Vlieslage 2 und an der Faserabgabeeinrichtung 22 generieren, wodurch eine elektrostatische Aufladung realisiert wird, die letztlich zu einem Ionenstrom führt, der Moleküle des Fasermaterials 21 von den Abgabezonen 28 abführt, in Richtung Vlieslage 2 transportiert und an der Vlieslage 2 anhaften lässt.

Bei der in Fig. 3 gezeigten Ausführungsform nimmt der zuvor genannte Abstand 29 zwischen der Vlieslage 2 und den Abgabezonen 28 in der Bewegungsrichtung 25 der Vlieslage 2 zu, und zwar kontinuierlich. Im Unterschied dazu zeigt Fig. 4 eine Ausführungsform, bei welcher der Abstand 29 zwischen der Vlieslage 2 und der jeweiligen Abgabezone 28 in der Bewegungsrichtung 25 der Vlieslage 2 abnimmt, und zwar gestuft.

In Fig. 3 ist die Vlieslage 2 gegenüber einer horizontalen und ebenen Oberfläche 31 des flüssigen Fasermaterials 21 geneigt, derart, dass besagter Abstand 29 in der Bewegungsrichtung 25 der Vlieslage 2 zunimmt. Im Unterschied dazu sind bei der in Fig. 4 gezeigten Ausführungsform mehrere Faserabgabeeinrichtungen 22 vorgesehen, nämlich rein exemplarisch drei Faserabgabeeinrichtungen 22. Die Faserabgabeeinrichtungen 22 sind in der Bewegungsrichtung 25 der Vlieslage 2 hintereinander angeordnet und unterscheiden sich voneinander durch unterschiedliche räumliche Höhen, wodurch sich verschiedene Abstände 29 gegenüber der Vlieslage 2 einstellen. Jede Faserabgabeeinrichtung 22 besitzt ein Förderband 23 der mit Bezug auf Fig. 3 beschriebenen Art, wobei diese Förderbänder 23 in Fig. 4 jedoch vereinfacht dargestellt sind; insbesondere sind die einzelnen Abgabeelemente 24 sowie deren Abgabezonen 28 nicht dargestellt. Erkennbar nimmt der Abstand 29 in der Bewegungsrichtung 25 der Vlieslage 2 von einer Faserabgabeeinrichtung 22 zur nächsten ab.

In den Fig. 2 bis 6 sind außerdem mehrere Umlenkrollen 32 angedeutet, welche die Vlieslage 2 bzw. die Celluloselage 4 bzw. das Filtermaterial 1 umlenken oder ausrichten. Erkennbar sind eine vordere, zuerst von der Vlieslage 2 überfahrende Umlenkrolle 32, die in den Fig. 3 bis 6 links dargestellt ist, und eine hintere, zuletzt von der Vlieslage 2 überfahrene Umlenkrolle 32, die in den Fig. 3 bis 6 rechts dargestellt ist. In Fig. 3 besitzen die beiden Umlenkrollen 32 unterschiedliche Höhenlagen. Die vordere Umlenkrolle 32 ist dabei tiefer angeordnet als die hintere Umlenkrolle 32, so dass die Vlieslage 2 in ihrer Bewegungsrichtung 25 ansteigt.

Im Beispiel der Fig. 4 besitzen die beiden Umlenkrollen 32 dagegen dieselbe Höhenlage, so dass sich die Vlieslage 2 zwischen den Umlenkrollen 32 horizontal erstreckt.

Doppelpfeile 34 bei den Umlenkrollen 32 deuten an, dass optional wenigstens eine der Umlenkrollen 32 hinsichtlich ihres Vertikalabstands von der Faserabgabeeinrichtung 22 einstellbar angeordnet sein kann. Bevorzugt lässt sich der senkrecht zur Horizontalen gemessene Vertikalabstand bei beiden Umlenkrollen 32 separat einstellen. Die Höhenverstellbarkeit wenigstens einer solchen Umlenkrolle 32 lässt sich eine Neigung einstellen, welche die Vlieslage 2 zwischen den Umlenkrollen 32 gegenüber einer Horizontalebene 36 besitzt, die in den Fig. 3 bis 6 jeweils durch eine strichpunktierte Linie angedeutet ist. Durch die Höhenverstellbarkeit wenigstens einer der Umlenkrollen 32 können auch die Abstände 29 zwischen den Abgabezonen 28 und der Vlieslage 2 justiert werden, um den Beschichtungsvorgang zu optimieren.

Bei der in Fig. 4 gezeigten Ausführungsform kann optional ebenfalls vorgesehen sein, dass wenigstens eine der Umlenkrolle 32 gemäß den Doppelpfeilen 34 höhenverstellbar angeordnet ist. Zusätzlich oder Alternativ kann vorgesehen sein, dass zumindest eine der Faserabgabeeinrichtungen 22 gemäß Doppelpfeilen 35 höhenverstellbar angeordnet ist. Auch auf diese Weise lassen sich die Abstände 29 zwischen den Abgabezonen 28 und der Vlieslage 2 justieren.

Fig. 5 zeigt eine Ausführungsform analog zu Fig. 3, bei welcher jedoch die Höhenlagen der Umlenkrollen 32 vertauscht sind. Demnach ist hier die vordere Umlenkrolle 32 höher angeordnet als die hintere Umlenkrolle 32. Somit ergibt sich für die Vlieslage 2 in ihrer Bewegungsrichtung 25 ein Gefälle. In der Folge reduzieren sich die Abstände 29 zwischen den Abgabezonen 28 und der Vlieslage 2 in deren Bewegungsrichtung 25.

Bei der in Fig. 6 gezeigten Ausführungsform sich die beiden Umlenkrollen 32 wieder auf gleiche Höhen eingestellt. In diesem Fall wird eine Zunahme der Abstände 29 zwischen den Abgabezonen 28 und der Vlieslage 2 in deren Bewegungsrichtung 25 dadurch erreicht, dass die Walzen 33 des Förderbands 23 unterschiedliche Durchmesser d und D besitzen. Im Beispiel der Fig. 6 ist der Durchmesser D der linken Walze 33 deutlich größer als der Durchmesser d der rechten Walze 33. Gleichzeitig sind die Walzen 33 hier so angeordnet, dass die Unterseite des Förderbands 23 innerhalb des Fasermaterials 21 etwa horizontal verläuft. In der Folge besitzt die Oberseite in der Bewegungsrichtung 25 der Vlieslage 2 ein Gefälle.

Es ist klar, dass die hier in Verbindung mit den Fig. 3 bis 6 vorgestellten Varianten zum Einstellen eines variierenden Abstands 29 zwischen den Abgabezonen 28 und der Vlieslage 2 auch beliebig miteinander kombinierbar sind.

## Patentansprüche

1. Mehrlagiges bahnförmiges Filtermaterial (1) für Filterelemente zur Filtration von Gasen und/oder Flüssigkeiten,
- mit einer Vlieslage (2),
- mit einer Nanofaserlage (3),
- mit einer Celluloselage (4),
- wobei die Nanofaserlage (3) durch eine Beschichtung der Vlieslage (2) mit Nanofasern gebildet ist,
- wobei die Celluloselage (4) mittels eines Klebstoffs (5) auf die Nanofaserlage (3) aufgeklebt ist,
**dadurch gekennzeichnet,**
- **dass** die Celluloselage (4) an einer der Nanofaserlage (3) zugewandten Seite mit einer Imprägnierung (6) versehen ist,
- **dass** die Imprägnierung (6) auf den Klebstoff (5) abgestimmt ist, so dass sie ein Eindringen des Klebstoffs (5) in die Celluloselage (4) verhindert oder zumindest behindert.

2. Filtermaterial nach Anspruch 1,
**dadurch gekennzeichnet,**
- **dass** der Klebstoff (5) auf einer Wasserbasis hergestellt ist, und/oder
- **dass** die Imprägnierung (6) auf einer Silikonbasis hergestellt ist oder aus Silikon besteht.

3. Filtermaterial nach Anspruch 1 oder 2,
**dadurch gekennzeichnet,**
**dass** die Nanofaserlage (3) in einer Dickenrichtung (7) des Filtermaterials (1) eine zunehmende Faserdicke und/oder eine zunehmende Faserdichte aufweist.

4. Filtermaterial nach Anspruch 3,
**dadurch gekennzeichnet,**
**dass** die Faserdicke und/oder die Faserdichte in der Dickenrichtung (7) des Filtermaterials (1) stufenlos, vorzugsweise gleichmäßig, oder gestuft, zunimmt.

5. Filtermaterial nach Anspruch 3 oder 4,
**dadurch gekennzeichnet,**
**dass** die Faserdicke und/oder die Faserdichte von der Vlieslage (2) zur Celluloselage (4) zunimmt/zunehmen.

6. Filterelement zum Filtern von Gasen und/oder Flüssigkeiten, mit mindestens einem Filterkörper, der im Betrieb des Filterelements von einem Strom aus Gas und/oder Flüssigkeit durchströmt ist, wobei der jeweilige Filterkörper ein Filtermaterial (1) nach einem der Ansprüche 1 bis 5 aufweist.

7. Filterelement nach Anspruch 6,
**dadurch gekennzeichnet,**
**dass** das Filtermaterial (1) plissiert ist.

8. Filterelement nach Anspruch 6 oder 7,
**dadurch gekennzeichnet,**
**dass** das Filterelement ein Ringfilterelement mit ringförmigem Filterkörper oder ein Plattenfilterelement mit plattenförmigem Filterkörper ist.

9. Verfahren zum Herstellen eines mehrlagigen, bahnförmigen Filtermaterials (1), insbesondere nach einem der Ansprüche 1 bis 5,
- bei dem eine bahnförmige Vlieslage (2) einseitig mit Nanofasern beschichtet wird, um unmittelbar an der Vlieslage (2) eine Nanofaserlage (3) zu erzeugen,
- bei dem auf eine bahnförmige Celluloselage (4) ein Klebstoff (5) aufgebracht wird,
- bei dem die Celluloselage (4) und die Vlieslage (2) zusammengeführt werden, so dass der Klebstoff (5) die Celluloselage (4) mit der Nanofaserlage (3) verbindet,
**dadurch gekennzeichnet,**
**dass** die Celluloselage (4) vor dem Aufbringen des Klebstoffs (5) einseitig mit einer Imprägnierung (6) versehen wird, wobei der Klebstoff auf die imprägnierte Seite der Celluloselage (4) aufgebracht wird und wobei die Imprägnierung (6) auf den Klebstoff (5) abgestimmt ist, so dass sie ein Eindringen des Klebstoffs (5) in die Celluloselage (4) verhindert oder zumindest behindert.

10. Verfahren nach Anspruch 9,
**dadurch gekennzeichnet,**
**dass** die Nanofasern in einer Beschichtungsstation (11) auf die Vlieslage (2) elektrostatisch aufgebracht werden, wobei in einer Faserabgabeeinrichtung (22) der Beschichtungsstation (11) zwischen dem flüssigen Fasermaterial (21) und der Vlieslage (2) ein Abstand (29) besteht.

11. Verfahren nach Anspruch 10,
**dadurch gekennzeichnet,**
**dass** der Abstand (29) in der Bewegungsrichtung (25) der Vlieslage (2) zunimmt oder abnimmt.

12. Verfahren nach Anspruch 10 oder 11,
**dadurch gekennzeichnet,**
**dass** die Vlieslage (2) mit einer Neigung an der horizontalen und ebenen Oberfläche (31) des Fasermaterials (21) vorbeibewegt wird.

13. Verfahren nach einem der Ansprüche 10 bis 12,
**dadurch gekennzeichnet,**
**dass** mehrere Faserabgabeeinrichtungen (22) in der Bewegungsrichtung (25) der Vlieslage (2) hintereinander vorgesehen sind, in denen verschiedene Abstände (29) zwischen dem Fasermaterial (21) und der Vlieslage (2) bestehen.

14. Verfahren nach einem der Ansprüche 10 bis 13,
**dadurch gekennzeichnet,**
**dass** zum Verändern des Abstands (29) bzw. der Abstände (29) eine Neigung der Vlieslage (2) gegenüber einer Horizontalebene (36) eingestellt wird.

## Claims

1. A multi-layered, web-shaped filter material (1) for filter elements for the filtration of gases and/or liquids,
- with a fleece layer (2),
- with a nanofibre layer (3),
- with a cellulose layer (4),
- wherein the nanofibre layer (3) is formed through a coating of the fleece layer (2) with nanofibres,
- wherein the cellulose layer (4) is glued onto the nanofibre layer (3) by means of an adhesive (5),
**characterized in**
- **that** the cellulose layer (4) at least on a side facing the nanofibre layer (3) is provided with an impregnation (6),
- **that** the impregnation (6) is matched to the adhesive (5) so that it prevents or at least impedes the adhesive (5) entering the cellulose layer (4).

2. The filter material according to Claim 1,
**Characterized in**
- **that** the adhesive (5) is produced on a water base, and/or
- **that** the impregnation (6) is produced on a silicone base or consists of silicone.

3. The filter material according to Claim 1 or 2,
**characterized in**
**that** the nanofibre layer (3) in a thickness direction (7) of the filter material (1) has an increasing fibre thickness and/or an increasing fibre density.

4. The filter material according to Claim 3,
**characterized in**
**that** the fibre thickness and/or the fibre density in the thickness direction (7) of the filter material (1) increases steplessly, preferentially evenly, or in steps.

5. The filter material according to Claim 3 or 4,
**characterized in**
**that** the fibre thickness and/or the fibre density increase/increases from the fleece layer (2) to the cellulose layer (4).

6. A filter element for filtering gases and/or liquids with at least one filter body, which during the operation of the filter element is subjected to a through-flow of gas and/or liquid, wherein the respective filter body has a filter material (1) according to any one of the Claims 1 to 5.

7. The filter element according to Claim 6,
**characterized in**
**that** the filter material (1) is pleated.

8. The filter element according to Claim 6 or 7,
**characterized in**
**that** the filter element is a ring filter element with a ring-shaped filter body or a plate filter element with a plate-shaped filter body.

9. A method for producing a multi-layered, web-shaped filter material (1), in particular according to any one of the Claims 1 to 6
- in which a web-shaped fleece layer (2) is coated with nanofibres on one side, in order to generate a nanofibre layer (3) directly on the fleece layer (2),
- in which an adhesive (5) is applied onto a web-shaped cellulose layer (4),
- in which the cellulose layer (4) and the fleece layer (2) are brought together so that the adhesive (5) connects the cellulose layer (4) to the nanofibre layer (3),
**characterized in**
**that** the cellulose layer (4) prior to applying the adhesive (5) is provided with an impregnation (6) at least on one side, wherein the adhesive is applied onto the impregnated side of the cellulose layer (4), wherein the impregnation (6) is matched to the adhesive (5) so that it prevents or at least impedes the adhesive (5) entering the cellulose layer (4).

10. The method according to Claim 9,
**characterized in**
**that** the nanofibres are electrostatically applied onto the fleece layer (2) in a coating station (11), wherein in a fibre dispensing device (22) of the coating station (11) there is a spacing (29) between the liquid fibre material (21) and the fleece layer (2).

11. The method according to Claim 10,
**characterized in**
**that** the spacing (29) increases or decreases in the movement direction (25) of the fleece layer (2).

12. The method according to Claim 10 or 11,
**characterized in**
**that** the fleece layer (2) is moved past the horizontal and flat surface (31) of the fibre material (21) with an inclination.

13. The method according to any one of the Claims 10 to 12,
**characterized in**
**that** a plurality of fibre dispensing devices (22) are provided in the movement direction (25) of the fleece layer (2) one after the other, in which there are different spacings (29) between the fibre material (21) and the fleece layer (2).

14. The method according to one of Claims 10 to 13,
**characterized in that**
for altering the spacing (29) or respectively the spacings (29), an inclination of the fleece layer (2) is adjusted with respect to a horizontal plane (36).

## Revendications

1. Matériau filtrant stratifié en forme de bande (1) pour éléments filtrants destinés à la filtration de gaz et/ou de liquides comprenant :
- une couche de non-tissé (2),
- une couche de nanofibres (3),
- une couche de cellulose (4),
- dans lequel la couche de nanofibres (3) est formée par un revêtement de la couche de non-tissé (2) par des nanofibres,
- dans lequel la couche de cellulose (4) est adhésivée au moyen d'un adhésif (5) sur la couche de nanofibres (3),
**caractérisé en ce que**
- la couche de cellulose (4) est pourvue d'une imprégnation (6) sur une face tournée vers la couche de nanofibres (3),
- l'imprégnation (6) est ajustée sur l'adhésif (5) de sorte qu'elle empêche une pénétration de l'adhésif (5) dans la couche de cellulose (4) ou au moins la gêne.

2. Matériau filtrant selon la revendication 1,
**caractérisé en ce que**
- l'adhésif (5) est fabriqué à base d'eau, et/ou
- l'imprégnation (6) est fabriquée à base de silicone ou est constituée de silicone.

3. Matériau filtrant selon la revendication 1 ou 2,
**caractérisé en ce que**
la couche de nanofibres (3) présente dans le sens de l'épaisseur (7) du matériau filtrant (1) une épaisseur de fibres croissante et/ou une densité de fibres croissante.

4. Matériau filtrant selon la revendication 3,
**caractérisé en ce que**
l'épaisseur de fibres et/ou la densité de fibres augmente(nt) dans le sens de l'épaisseur (7) du matériau filtrant (1) de façon progressive, de préférence régulièrement, ou par étages.

5. Matériau filtrant selon la revendication 3 ou 4,
**caractérisé en ce que**
l'épaisseur des fibres et/ou la densité des fibres augmente(nt) de la couche de non-tissé (2) à la couche de cellulose (4).

6. Elément filtrant destiné à la filtration de gaz et/ou de liquides, avec au moins un corps filtrant qui est parcouru lors de l'utilisation de l'élément filtrant par un courant de gaz et/ou de liquide, dans lequel le corps filtrant respectif présente un matériau filtrant (1) selon l'une quelconque des revendications 1 à 5.

7. Elément filtrant selon la revendication 6,
**caractérisé en ce que**
le matériau filtrant (1) est plissé.

8. Matériau filtrant selon la revendication 6 ou 7,
**caractérisé en ce que**
l'élément filtrant est un élément filtrant annulaire avec un corps filtrant de forme annulaire ou un élément filtrant en plaque avec un corps filtrant en forme de plaque.

9. Procédé de fabrication d'un matériau filtrant stratifié en forme de bande (1), en particulier selon l'une quelconque des revendications 1 à 5,
- dans lequel une couche de non-tissé en forme de bande (2) est revêtu de nanofibres d'un côté pour produire directement une couche de nanofibres (3) sur la couche de non-tissé (2),
- dans lequel un adhésif (5) est appliqué sur une couche de cellulose en forme de bande (4),
- dans lequel la couche de cellulose (4) et la couche de non-tissé (2) sont réunies de sorte que l'adhésif (5) relie la couche de cellulose (4) à la couche de nanofibres (3),
**caractérisé en ce que**
la couche de cellulose (4) est pourvue, avant l'application de l'adhésif (5), sur une face d'une imprégnation (6), dans lequel l'adhésif est appliqué sur la face imprégnée de la couche de cellulose (4) et dans lequel l'imprégnation (6) est ajustée sur l'adhésif (5) de sorte qu'elle empêche ou au moins gêne une pénétration de l'adhésif (5) dans la couche de cellulose (4).

10. Procédé selon la revendication 9,
**caractérisé en ce que**
les nanofibres sont appliquées par voie électrostatique sur la couche de non-tissé (2) dans un poste de revêtement (11), dans lequel il y a une distance (29) entre le matériau filtrant liquide (21) et la couche de non-tissé (2) dans un dispositif de fourniture de fibres (22) du poste de revêtement (11).

11. Procédé selon la revendication 10,
**caractérisé en ce que**
la distance (29) augmente ou diminue dans le sens de déplacement (25) de la couche de non-tissé (2).

12. Procédé selon la revendication 10 ou 11,
**caractérisé en ce que**
la couche de non-tissé (2) est déplacée avec une inclinaison sur la surface horizontale et unie (31) du matériau fibreux (21).

13. Procédé selon l'une quelconque des revendications 10 à 12,
**caractérisé en ce que**
plusieurs dispositifs de fourniture de fibres (22) sont prévus l'un derrière l'autre dans le sens de déplacement (25) de la couche de non-tissé (2), dans lesquels dispositifs il y a diverses distances (29) entre le matériau fibreux (21) et la couche de non-tissé (2).

14. Procédé selon l'une quelconque des revendications 10 à 13,
**caractérisé en ce que**
pour modifier la distance (29) ou les distances (29), on ajuste une inclinaison de la couche de non-tissé (2) vis-à-vis d'un plan horizontal (36).
